# EUROPEAN PATENT APPLICATION

(11) **EP 1 736 694 A1**
(43) Date of publication of application: **27.12.2006**
(21) Application number: 06115687.3
(22) Date of filing: 19.06.2006
(51) Int. Cl.: F16K 5/10, F16K 5/12

(54) **Intercepting valve**

(30) Priority: 24.06.2005 IT BS20050076
(71) Applicant: Enolgas Bonomi S.p.A., 25062 Concesio (Brescia) (IT)
(72) Inventor: Cipolla, Giovanni, 26100 Cremona (IT)
(74) Representative: Crippa, Paolo Ernesto

(57) **Abstract**

The present invention relates to an intercepting valve (1), for example ball, comprising an interference element (40) suitable for delimiting a reduced section for the flow of said fluid. The valve obtains a linear matching between the rotation angle of the ball and the output flow rate and at the same time, it reduces the maximum flow rate on the basis of the utility requirements, by suitably shaping said reduced section.

## Description

The object of the present invention is an intercepting valve suitable for intercepting a fluid in a duct. In particular, the object of the present invention is a ball valve.

A ball valve of the type currently known comprises a hollow seating body and a spherical body, seated in the seating body and intended for intercepting the fluid. The spherical body is provided with a through duct, which exhibits an inlet and an outlet. When the spherical body is rotated, the valve switches from a closed configuration, wherein the fluid flow is blocked, to an open configuration, passing through a sequence of intermediate configurations.

In the field of ball valves, the need of obtaining a linear matching between the angle of rotation of the spherical body and the fluid flow rate in output from the valve is especially felt.

To meet such need, some known solutions exhibit a shape of the inlet or of the outlet of the duct of the spherical body, designed so as to obtain, by rotating the spherical body, such fluid flow gap as to generate a linear matching between the angle of rotation and the downstream flow rate of the valve.

Ball valves of the type described above are shown, for example, in document US5,551,467, US5,593,135 and US5,937,890.

However, known solutions do not fully meet the requirement. This is due, in particular, to the fact that the rate of fluid downstream of the valve does not only depend on the extension of the fluid flow gap through the spherical body, but also on other factors, such as for example the onset of fluid-dynamic turbulence phenomena.

The object of the present invention is to provide a ball valve suitable for obtaining a substantially linear matching between the angle of rotation of the spherical body and the fluid flow rate downstream of the valve.

The features and advantages of the ball valve according to the present invention will appear more clearly from the following description, made by way of an indicative and non-limiting example with reference to the following figures, wherein:

**-** figure 1 shows a plan view of an intercepting valve;

- figure 2 shows a front view of the valve of figure 1;

- figure 3 shows a side section view of the valve of figure 1, obtained with a section plane having trace III-III in figure 1;

- figure 4 shows a front view of an intercepting element of the valve of figure 1;

**-** figure 5 shows a side view of the intercepting element of figure 4; and

**-** figure 6 shows a side section view of the intercepting element of figure 4, obtained with a section plane having trace VI-VI in figure 4.

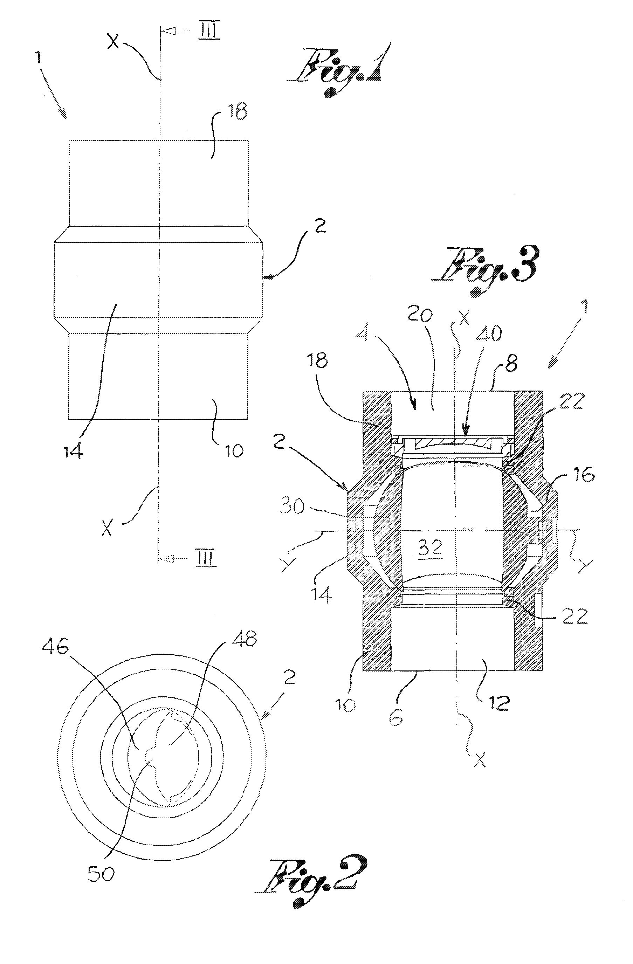

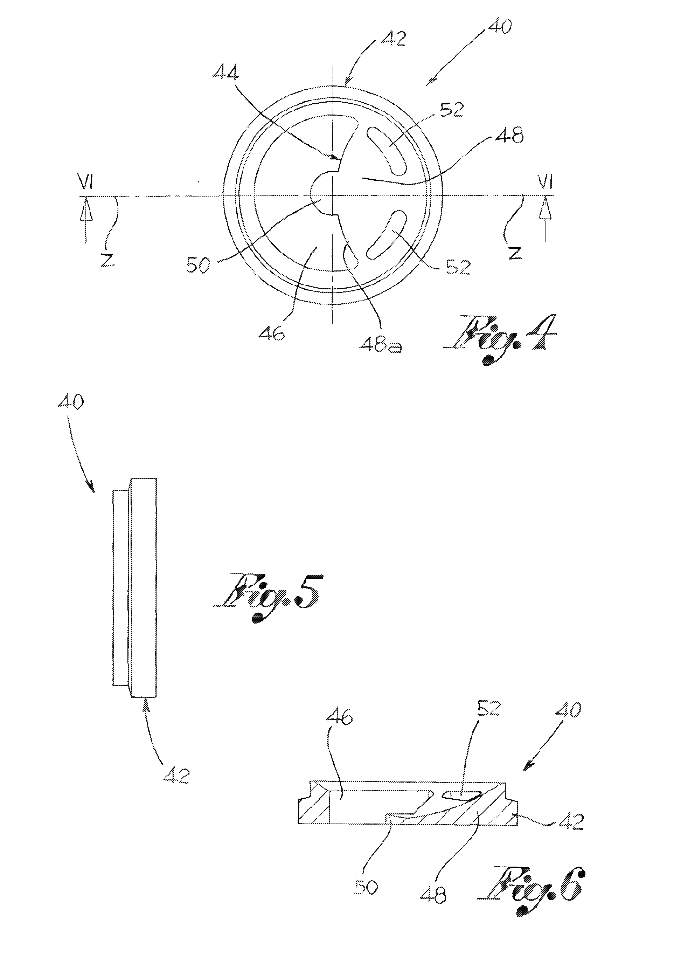

With reference to the annexed figures, reference numeral 1 globally denotes an intercepting valve according to the present invention, in particular a ball valve.

Said valve 1 is associable to an upstream portion and to a downstream portion of a duct and is suitable for intercepting a flow of a fluid in said duct, for allowing the flow of said fluid from the upstream portion to the downstream portion or for preventing said flow.

Valve 1 comprises a seating body 2 which exhibits an inner cavity 4 having an extension along a longitudinal axis (X-X) between a first section 6 for the fluid inlet from said upstream portion of the duct and a second section 8 for the fluid outlet towards said downstream portion of the duct.

According to a preferred embodiment, said body 2 comprises a tubular inlet portion 10 which delimits an inlet space 12 of cavity 4. Said body 2 further comprises a central body portion 14 which delimits an intermediate chamber 16 of said cavity 4. Moreover, body 2 comprises a tubular outlet portion 18 which delimits an outlet space 20 of said cavity 4.

Preferably, moreover, body 2 comprises at least one annular projection 22. Preferably, said body 2 comprises two annular projections 22, respectively arranged at the opening between said inlet space 12 and said intermediate chamber 16 and at the opening between said outlet space 20 and said intermediate chamber 16.

Moreover, valve 2 comprises an intercepting body 30, seated in said cavity 4 of body 2, preferably in said intermediate chamber 16.

The intercepting body 30 is suitable for being manipulated for switching from a closed configuration, wherein it prevents the fluid flow from said upstream portion to said downstream portion, to an open configuration, wherein said flow is permitted.

According to a preferred embodiment, said valve 1 comprises operating means, operatively connected to said intercepting body, for example mechanically connected to said intercepting body, for manipulating said intercepting body 30 between said closed configuration and said open configuration and vice versa.

For example, said operating means comprise a lever actuable by hand or a motor, for example electrical.

Preferably, said intercepting body 30 is a spherical element that can be manipulated in rotation about an axis of rotation Y-Y substantially perpendicular to said longitudinal axis X-X.

Said spherical element exhibits a through hole 32 suitable for placing said upstream portion in fluid communication with said downstream portion in said valve open configuration.

Moreover, valve 1 comprises an interference element 40, separate from said intercepting body 30, suitable for being impinged, at least with a portion thereof, by said fluid flow.

Preferably, said interference element 40 is seated in said outlet space 20, in abutment with said annular projection 22 of the seating body 2.

Preferably, said interference element 40 comprises a ring 42 suitable for positioning said interference element 40.

Said ring 42 exhibits at least one diametrical symmetry axis Z-Z.

The interference element 40 further comprises an interference wall 44 suitable for delimiting at least a reduced section 46 for the flow of said fluid. Said reduced section preferably exhibits a "C" shape.

Preferably, said interference wall 44 is at least partly concave and, in accordance with an embodiment of the valve, said concavity faces the intercepting body 30 of valve 2.

Preferably, the interference wall 44 comprises a connecting portion 48 jointed to said ring 42 and a central portion 50 protruding from said connecting portion.

Preferably, said connecting portion 48 exhibits a free edge 48a arched and convex towards said reduced section 46. Said central portion 50 protrudes from said free edge 48a.

The free edge 48a extends, in accordance with an embodiment, entirely in a half of the section of said ring.

In accordance with a preferred embodiment, the connecting portion 48 exhibits at least one through opening 52, preferably having a circumference arc extension.

In accordance with a preferred embodiment, said through openings 52 are in a number of two and have symmetrical arrangement and shape relative to said symmetry axis Z-Z of ring 42 of the interference element 40.

Preferably, moreover, said central portion 50 of the interference wall 44 is crossed by said symmetry axis Z-Z and is symmetrical relative to said symmetry axis.

In the standard use of valve 1, in a closed configuration, the intercepting body 30 is in a first position wherein it prevents the fluid flow from the upstream portion to the downstream portion of the duct.

In an intermediate open configuration, the intercepting body 30 is in a rotated position relative to the position taken in the closed configuration. In said intermediate configuration, the through hole 32 places the inlet space 12 in communication with the outlet space 20 of the valve, but said hole is partly blocked by the central body portion 14, so as to form a fluid flow gap having smaller extension than the flow section of said through hole 32.

In said intermediate open configuration, said flow gap opens in front of said interference element 40 and in particular in front of said connecting portion 48.

In a maximum open configuration, the intercepting body 30 is in a rotated position relative to the position taken in the closed configuration. In said maximum open configuration, the through hole 32 places the inlet space 12 in communication with the outlet space 20 of the valve and is fully free, so as to form a fluid flow gap having extension equal to the flow section of said through hole 32.

In said maximum open configuration, said flow gap opens in front of said interference element 40 and in particular in front of said central portion 50.

Innovatively, the valve according to the present invention allows obtaining a substantially linear matching between the angle of rotation of the spherical element and the fluid flow rate in output from the valve.

Advantageously, said valve uses the turbulence phenomena that can be found in the motion of fluids within such valves for reaching its purpose. In particular, said valve, and in particular the interference element installed therein allows obtaining a turbulent motion field downstream of the intercepting body, by suitably shaping the interference wall of said interference element.

The flow of a fluid comprises a limit layer, in the proximity of the wall of the valve body, and a submerged jet, internal to said limit layer. The submerged jet is associated to the predominant contribution to the flow rate. The interference element is suitable for breaking the submerged jet in output from the intercepting body by imposing a considerable deviation of the fluid flow also for low rotation angles of the ball, that is, for angular positions close to the closed one.

Advantageously, moreover, the valve allows reducing the flow rate to the values required for the use. By suitably shaping said reduced section, different maximum values of the output flow rate are obtained.

Advantageously, moreover, said intercepting element can be installed on already finished valves, for example by a ring nut.

In other words, unlike what happens with other solutions currently known, the valve according to the present invention does not require the introduction of means suitable for making the matching between the angle of rotation and the output flow rate inside the valve linear, thus imposing a poor convenience to the application.

It is clear that a man skilled in the art can make several changes and adjustments to the valve described above in order to meet specific and incidental needs, all falling within the scope of protection defined in the following claims.

## Claims

1. An intercepting valve (1) associable to an upstream portion and a downstream portion of a duct, said valve being suitable for intercepting a fluid flow in said duct,
wherein said valve comprises:
- a seating body (2) which has an inner cavity (4) having an extension along a longitudinal axis (X-X) between a first section for the fluid inlet from said upstream portion of the duct and a second section for the fluid outlet towards said downstream portion of the duct;
- an intercepting body (30), seated in said cavity of the seating body, suitable for being manipulated for switching from a closed configuration, wherein it prevents the fluid flow from the upstream portion to the downstream portion of the duct, to an open configuration,
wherein said flow is permitted;
said valve being **characterised in that** it comprises an interference element (40), separate from said intercepting body (30), comprising at least one interference wall (44) suitable for delimiting a reduced section (46) for the flow of said fluid.

2. A valve according to claim 1, wherein said interference wall is at least partly concave.

3. A valve according to claim 2, wherein said concavity faces said intercepting body of the valve.

4. A valve according to any one of the previous claims,
wherein said interference element comprises a ring (42) suitable for positioning said element, said ring exhibiting as diametrical symmetry axis (Z-Z), and
wherein said interference wall (44) comprises a connecting portion (48) joined to said ring and a central portion (50) protruding from said connecting portion.

5. A valve according to claim 4, wherein said connecting portion has an arched free edge (48a), from which said central portion (50) protrudes.

6. A valve according to claim 5, wherein said edge (48a) entirely extends in a half of the section of said ring (42).

7. A valve according to any one of claims 4 to 6, wherein said connecting portion (48) exhibits at least one through opening (52).
